# FASCICULE DE BREVET EUROPEEN

(11) **EP 1 790 458 B1**
(45) Date de publication et mention de la délivrance du brevet: **25.01.2017**
(21) Numéro de dépôt: 06356136.9
(22) Date de dépôt: 27.11.2006
(51) Int. Cl.: B29C 45/73, B29C 33/04

(54) **Moule d'injection équipé d'un circuit de refroidissement**
Spritzgiesswerkzeug mit Kühlkreislauf
Injection mould with a cooling circuit

(30) Priorité: 28.11.2005 FR 0512015
(43) Date de publication de la demande: 30.05.2007
(73) Titulaire: STÄUBLI FAVERGES, 74210 Faverges (FR)
(72) Inventeur: Tiberghien, Alain-Christophe, 74320 Sevrier (FR)
(74) Mandataire: Lavoix

(56) Documents cités:
- EP-A- 1 158 179
- EP-A- 1 413 809
- DE-A1- 3 918 250
- US-A- 4 447 040
- PATENT ABSTRACTS OF JAPAN vol. 1995, no. 11, 26 décembre 1995 (1995-12-26) -& JP 07 214626 A (SANYO ELECTRIC CO LTD), 15 août 1995 (1995-08-15)
- PATENT ABSTRACTS OF JAPAN vol. 016, no. 578 (M-1346), 17 décembre 1992 (1992-12-17) -& JP 04 229216 A (NISSEI PLASTICS IND CO), 18 août 1992 (1992-08-18)
- PATENT ABSTRACTS OF JAPAN vol. 017, no. 324 (M-1433), 21 juin 1993 (1993-06-21) -& JP 05 038740 A (KOSUMETSUKU:KK), 19 février 1993 (1993-02-19)

## Description

La présente invention a trait à un moule d'injection, du type comportant un circuit de refroidissement, l'entrée et la sortie du circuit de refroidissement étant équipées chacune d'un élément de raccord à obturateur pour la connexion et la déconnexion avec un circuit d'alimentation en fluide de refroidissement.

Dans le domaine de l'injection plastique, il est connu d'utiliser des moules d'injection constitués de deux demi-moules parcourus chacun par un fluide de refroidissement circulant dans un circuit de refroidissement. Lorsqu'un moule doit être changé, par exemple lors d'un changement de série, le circuit de refroidissement de chaque demi-moule est déconnecté du circuit d'alimentation en fluide de refroidissement. Afin de rendre ces manipulations plus rapides, chaque circuit de refroidissement est équipé en entrée et en sortie d'un élément de raccord rapide à obturateur qui ferme le circuit en configuration désaccouplée, comme décrit dans DE-A-39 18 250. Ceci permet de changer le moule sans vidanger son circuit de refroidissement.

Dans le cas où les circuits de refroidissement sont déconnectés alors que le moule est encore chaud, la température du fluide de refroidissement emprisonné dans chaque circuit augmente sensiblement. Le fluide tend à se dilater mais le circuit est étanche. La pression augmente alors très fortement du fait de la faible compressibilité des liquides. Cette augmentation de pression est susceptible d'entraîner des détériorations du moule au niveau du circuit de refroidissement.

Par ailleurs, US-A-4,447,040 décrit des dispositifs de détente pour circuits de fluide équipés d'éléments de raccord à obturateurs, et notamment un élément de raccord apte à fonctionner comme un clapet de détente lorsqu'il est en configuration désaccouplée. Un tel dispositif a l'inconvénient d'entraîner des pertes de fluide.

C'est à ces inconvénients qu'entend plus particulièrement remédier l'invention en proposant un moule d'injection équipé d'un circuit de refroidissement étanche pour lequel l'augmentation de la pression, consécutive à la déconnexion du circuit de refroidissement lorsque le moule est encore chaud, n'entraîne pas de détérioration de ce circuit.

A cet effet, l'invention a pour objet un moule d'injection du type précité, caractérisé en ce que le circuit de refroidissement est muni d'un dispositif de compensation de volume, le dispositif de compensation de volume comportant des joints d'étanchéité propres à empêcher toute perte de fluide de refroidissement hors du circuit de refroidissement.

Selon d'autres caractéristiques avantageuses de l'invention :
- le dispositif de compensation de volume comporte un piston coulissant de manière étanche dans un alésage interne du dispositif, ce piston étant soumis, sur une première face, à un effort dû à la pression du fluide de refroidissement dans le circuit de refroidissement et, sur une seconde face opposée à la première face, à un effort de rappel élastique opposé à l'effort dû à la pression ;
- le dispositif de compensation de volume est intégré dans l'encombrement du moule ;
- le dispositif de compensation de volume est inséré dans une ouverture débouchant d'un côté sur le circuit de refroidissement et de l'autre côté sur l'extérieur du moule ;
- le dispositif de compensation de volume est réalisé sous la forme d'un bouchon placé dans un alésage concentrique à un conduit du circuit de refroidissement, le piston étant coulissant dans un alésage interne ménagé dans le corps du bouchon ;
- le bouchon est vissé dans un taraudage ménagé dans un alésage concentrique au conduit ;
- le bouchon est pourvu d'un joint d'étanchéité assurant un vissage étanche du bouchon dans le taraudage ;
- l'alésage interne du bouchon est pourvu d'un joint d'étanchéité assurant un coulissement étanche du piston dans cet alésage interne ;
- le corps du bouchon comporte une ouverture de mise en communication avec l'extérieur du moule d'un volume interne du bouchon, situé du côté de la seconde face du piston ;
- l'effort de rappel élastique est exercé par un ressort intercalé entre la seconde face du piston et le fond du corps du bouchon situé du côté de cette seconde face.

Les caractéristiques et avantages de l'invention apparaîtront dans la description qui va suivre d'un mode de réalisation d'un moule d'injection selon l'invention, donnée uniquement à titre d'exemple et faite en se référant aux dessins annexés, dans lesquels :
- la figure 1 est une coupe d'un demi-moule d'injection conforme à l'invention, muni d'un circuit de refroidissement alimenté en fluide de refroidissement ;
- la figure 2 est une coupe analogue à la figure 1, alors que le circuit de refroidissement est déconnecté du circuit d'alimentation en fluide de refroidissement et que le dispositif de compensation de volume agit ;
- la figure 3 est une vue à plus grande échelle du détail III à la figure 2 lorsque le dispositif de compensation de volume agit ;
- la figure 4 est une vue analogue à la figure 3 lorsque le demi-moule est en place sur la machine et alimenté en liquide de refroidissement.

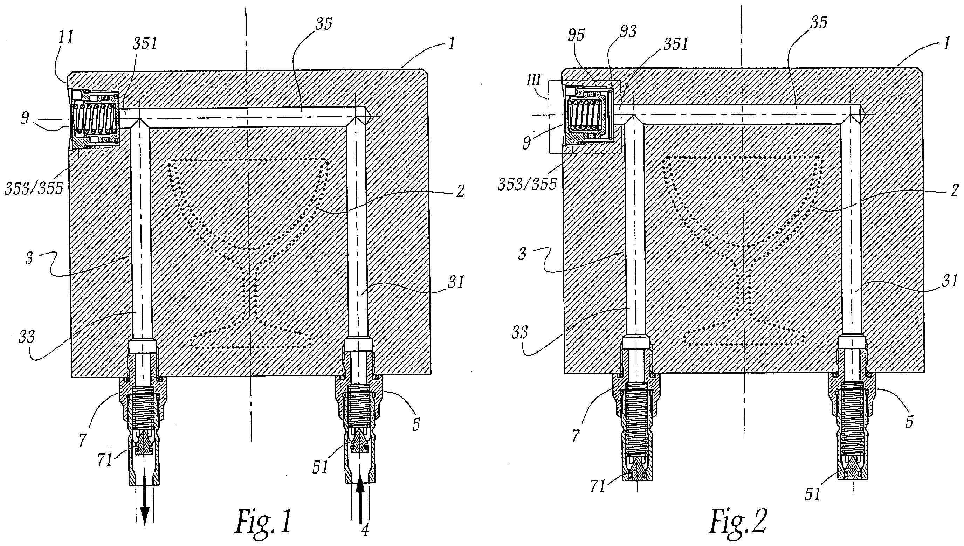

Le demi-moule 1 représenté à la figure 1 contient l'empreinte 2 d'un demi-verre. Le refroidissement de ce demi-moule est réalisé par la circulation d'un fluide de refroidissement à l'intérieur de conduits d'un circuit 3 de refroidissement. Le circuit 3 de refroidissement comporte un conduit d'entrée 31, un conduit de sortie 33 et un conduit intermédiaire 35 qui relie les conduits 31 et 33. Les trois conduits 31, 33, 35 sont percés dans le demi-moule 1.

Les conduits d'entrée et de sortie 31 et 33 sont reliés à un circuit 4 d'alimentation en fluide de refroidissement. Deux éléments mâles de raccord ou abouts 5 et 7, pourvus chacun d'un obturateur 51 et 71 et étanches à la connexion et à la déconnexion avec le circuit 4, équipent respectivement le conduit d'entrée 31 et le conduit de sortie 33.

Les abouts 5 et 7, forment avec des éléments femelles correspondantes du circuit 4, des raccords rapides de mise en communication des circuits 3 et 4. Selon une variante non représentée de l'invention, le circuit 3 de refroidissement peut être muni d'éléments femelles de raccord à obturateur, alors que des abouts mâles équipent le circuit 4.

Le conduit intermédiaire 35 est obtenu par perçage et se prolonge, au-delà du conduit de sortie 33 et en direction d'une paroi latérale 11 du demi-moule 1, par une portion de conduit 351. Un taraudage 355 est ménagé dans un alésage 353 concentrique à la portion 351.

La portion 351 est reliée à un dispositif 9 de compensation de volume, réalisé sous la forme d'un bouchon. Le bouchon 9 est vissé dans le taraudage 355 de manière à s'intégrer dans l'encombrement du demi-moule 1. Un joint torique 94 assure l'étanchéité du vissage du bouchon 9 dans le taraudage 355.

Un piston 95 est apte à coulisser dans un alésage interne 93 du corps 91 du bouchon 9. Un second joint torique 96 permet d'assurer l'étanchéité du coulissement du piston 95 dans l'alésage interne 93. Du fait de l'étanchéité obtenue au moyen des joints toriques 94 et 96, la face 95A du piston 95 orientée en direction du conduit 35 est en contact avec le fluide de refroidissement, la face 95B orientée vers la paroi latérale 11 du demi-moule 1 étant isolée du fluide de refroidissement.

Ainsi, la face 95A du piston 95 est soumise à un effort Fₚ dû à la pression du fluide de refroidissement dans le circuit 3 de refroidissement.

De plus, grâce aux joints d'étanchéité 94 et 96, le circuit 3 de refroidissement équipé du bouchon 9 de compensation de volume est étanche, ce qui permet d'éviter toute perte de fluide de refroidissement, tout en étant compatible avec une expansion volumique de ce fluide.

Un ressort de compression 97 est intercalé entre la face 95B du piston 95 et le fond 911 du corps 91 opposé au conduit 35. Ce ressort 97 exerce sur la face 95B du piston 95 un effort élastique Fₑ qui tend à repousser le piston 95 en direction du conduit 35 contre un jonc de butée 98. Une ouverture 99 est ménagée dans le fond 911 du corps 91 et met en communication un volume V₉, interne au bouchon 9 et situé à l'arrière de la face 95B avec l'extérieur du demi-moule 1. La face 95B est soumise à un effort F_{Pa} résultant de la pression atmosphérique Pₐ.

Lorsque le circuit 3 de refroidissement est raccordé au circuit 4 d'alimentation en fluide de refroidissement, comme représenté à la figure 1, une pression P₁ de l'ordre de la pression atmosphérique Pₐ règne dans le circuit 3. Le ressort 97 est choisi de telle sorte que la position d'équilibre du piston 95 soumis aux efforts Fₚ, F_{Pa} et Fₑ correspond alors à la venue en butée du piston 95 contre le jonc 98.

Lorsque les abouts 5 et 7 sont déconnectés par rapport au circuit 4 d'alimentation en fluide de refroidissement alors que le demi-moule 1 est encore chaud, comme représenté à la figure 2, la température du fluide de refroidissement emprisonné dans le circuit 3 de refroidissement augmente sensiblement. Cette augmentation de température entraîne une dilatation du fluide de refroidissement. Le volume occupé par le fluide étant fermé, la pression régnant dans le circuit 3 de refroidissement augmente. Cette pression atteint une valeur P₂, supérieure à la valeur P₁ correspondant à l'équilibre du piston 95 en butée contre le jonc 98.

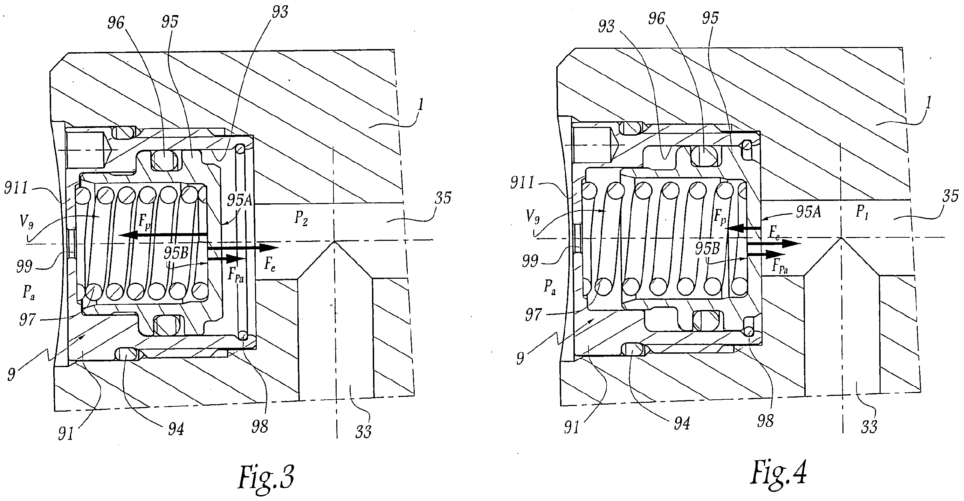

L'effort Fₚ correspondant à la pression P₂ s'exerce alors sur le piston 95 à l'encontre des efforts Fₑ et F_{Pa} pour faire coulisser le piston 95 dans l'alésage interne 93 jusqu'à une nouvelle position d'équilibre représentée à la figure 3.

L'ouverture 99 ménagée dans le corps 91 du bouchon 9 permet d'éviter tout emprisonnement de gaz dans le bouchon 9 à l'arrière de la face 95B du piston 95. La nouvelle position d'équilibre du piston 95 est telle que l'augmentation de volume concédée au fluide de refroidissement correspond à sa dilatation.

Au fur et à mesure du refroidissement du demi-moule 1, la température du fluide de refroidissement diminue, de même que la pression régnant dans le circuit de refroidissement et l'effort Fₚ correspondant. Sous l'effet de l'effort Fₑ, le piston 95 coulisse progressivement en direction du jonc 98, jusqu'à venir en butée contre celui-ci lorsque la pression atteint la valeur P₁.

Le dispositif 9 de compensation de volume permet ainsi de limiter l'augmentation de pression dans le circuit 3 de refroidissement par une augmentation du volume disponible pour le fluide de refroidissement. De cette façon, la pression régnant dans le circuit 3 de refroidissement déconnecté du circuit 4 d'alimentation en fluide de refroidissement est maintenue à une valeur relativement faible, permettant d'éviter toute détérioration du circuit 3 de refroidissement conduisant à des fuites, en particulier aux interfaces entre le moule et les abouts ou le moule et des pièces destinées à obstruer les trous de perçage des conduits.

## Revendications

1. Moule d'injection (1), du type comportant un circuit (3) de refroidissement, l'entrée (31) et la sortie (33) du circuit (3) de refroidissement étant équipées chacune d'un élément de raccord (5, 7) à obturateur (51, 71) pour la connexion et la déconnexion avec un circuit (4) d'alimentation en fluide de refroidissement, **caractérisé en ce que** le circuit (3) de refroidissement est muni d'un dispositif (9) de compensation de volume, ledit dispositif (9) de compensation de volume comportant des joints d'étanchéité (94, 96) propres à empêcher toute perte de fluide de refroidissement hors du circuit (3) de refroidissement.

2. Moule d'injection selon la revendication 1, **caractérisé en ce que** ledit dispositif (9) de compensation de volume comporte un piston (95) coulissant de manière étanche dans un alésage interne (93) dudit dispositif, ledit piston étant soumis, sur une première face (95A), à un effort (Fₚ) dû à la pression (P₁, P₂) du fluide de refroidissement dans ledit circuit (3) de refroidissement et, sur une seconde face (95B) opposée à la première face et isolée du fluide de refroidissement, à un effort (Fₑ) de rappel élastique opposé à l'effort dû à la pression.

3. Moule d'injection selon l'une quelconque des revendications précédentes, **caractérisé en ce que** ledit dispositif (9) de compensation de volume est intégré dans l'encombrement du moule (1).

4. Moule d'injection selon la revendication 3, **caractérisé en ce que** ledit dispositif (9) de compensation de volume est inséré dans une ouverture (351) débouchant d'un côté sur le circuit (3) de refroidissement et de l'autre côté sur l'extérieur du moule.

5. Moule d'injection selon l'une quelconque des revendications 2 à 4, **caractérisé en ce que** ledit dispositif de compensation de volume est réalisé sous la forme d'un bouchon (9) placé dans un alésage (353) concentrique à un conduit (35) dudit circuit (3) de refroidissement, le piston (95) étant coulissant dans un alésage interne (93) ménagé dans le corps (91) dudit bouchon.

6. Moule d'injection selon la revendication 5, **caractérisé en ce que** ledit bouchon (9) est vissé dans un taraudage (355) ménagé dans ledit alésage (353) concentrique au conduit (35).

7. Moule d'injection selon la revendication 6, **caractérisé en ce que** ledit bouchon (9) est pourvu d'un joint d'étanchéité (94) assurant un vissage étanche du bouchon dans ledit taraudage (355).

8. Moule d'injection selon l'une quelconque des revendications 5 à 7, **caractérisé en ce que** ledit alésage interne (93) du bouchon (9) est pourvu d'un joint d'étanchéité (96) assurant un coulissement étanche du piston (95) dans ledit alésage interne.

9. Moule d'injection selon l'une quelconque des revendications 5 à 8, **caractérisé en ce que** le corps (91) du bouchon (9) comporte une ouverture (99) de mise en communication avec l'extérieur du moule (1) d'un volume (V₉) interne au bouchon et situé du côté de ladite seconde face (95B) du piston (95).

10. Moule d'injection selon l'une quelconque des revendications 5 à 9, **caractérisé en ce que** l'effort de rappel élastique (Fₑ) est exercé par un ressort (97) intercalé entre ladite seconde face (95B) du piston (95) et le fond (911) du corps (91) du bouchon (9) situé du côté de ladite seconde face.

## Patentansprüche

1. Einspritzform (1), die einen Abkühlkreis (3) aufweist, wobei der Einlass (31) und der Auslass (33) des Abkühlkreises jeweils mit einem Element (5, 7) für den Anschluss an ein Verschlussorgan (51, 71) für die Verbindung mit oder die Abschaltung von einem Kreis (4) zur Versorgungmit Kühlfluid ausgerüstet sind, **dadurch gekennzeichnet, dass** der Abkühlkreis (3) mit einer Vorrichtung (9) zur Volumenkompensation versehen ist, wobei die Vorrichtung (9) zur Volumenkompensation Dichtungen (94, 96) aufweist, die geeignet sind, jeden Verlust an Kühlfluid nach außen in Bezug auf den Abkühlkreis (3) zu verhindern.

2. Einspritzform nach Anspruch 1, **dadurch gekennzeichnet, dass** die Vorrichtung (9) zur Volumenkompensation einen Kolben (95) aufweist, der in abgedichteter Weise in einer Innenbohrung (93) der Vorrichtung gleitet, wobei der Kolben an einer ersten Stirnfläche (95A) einer den Druck (P₁, P₂) des Abkühlfluids in dem Abkühlkreis (3) geschuldeten Kraft (Fₚ) und an einer zweiten Stirnfläche (95B), entgegengesetzt zur ersten Stirnfläche und isoliert von dem Abkühlfluid, einer Kraft (Fₑ) zur elastischen Rückstellung, entgegengesetzt zu der dem Druck geschuldeten Kraft unterworfen wird.

3. Einspritzform nach einem beliebigen der vorhergehenden Ansprüche, **dadurch gekennzeichnet, dass** die Vorrichtung (9) zur Volumenkompensation in den Raum der Form (1) integriert ist.

4. Einspritzform nach Anspruch 3, **dadurch gekennzeichnet, dass** die Vorrichtung (9) zur Volumenkompensation in eine Öffnung (351) eingefügt ist, die an einer Seite in den Abkühlkreis (3) mündet und an der anderen Seite nach außen in Bezug auf die Form mündet.

5. Einspritzform nach einem beliebigen der Ansprüche 2 bis 4, **dadurch gekennzeichnet, dass** die Vorrichtung zur Volumenkompensation in Form eines Stopfens (9) realisiert ist, der in einer konzentrisch zu einem Kanal (35) des Abkühlkreises (3) liegenden Bohrung (353) angeordnet ist, wobei der Kolben (95) in einer Innenbohrung gleitend angeordnet ist, die in dem Körper (91) des Stopfens eingearbeitet ist.

6. Einspritzform nach Anspruch 5, **dadurch gekennzeichnet, dass** der Stopfen (9) in ein Gewinde (355) eingeschraubt ist, das in der konzentrisch zum Kanal (35) liegenden Bohrung (353) eingearbeitet ist.

7. Einspritzform nach Anspruch 6, **dadurch gekennzeichnet, dass** der Stopfen (9) mit einer Dichtung (94) versehen ist, die ein dichtes Einschrauben des Stopfens in das Gewinde (355) sicherstellt.

8. Einspritzform nach einem beliebigen der Ansprüche 5 bis 7, **dadurch gekennzeichnet, dass** die Innenbohrung (93) des Stopfens (9) mit einer Dichtung (96) versehen ist, die ein abgedichtetes Gleiten des Kolbens (95) in der Innenbohrung sicherstellt.

9. Einspritzform nach einem beliebigen der Ansprüche 5 bis 8, **dadurch gekennzeichnet, dass** der Körper (91) des Kolbens (9) eine Öffnung (99) zum Verbinden eines Innenvolumens (V₉) des Stopfens mit dem Außenraum in Bezug auf die Form (1), die auf der Seite der zweiten Stirnfläche (95B) des Kolbens (95) liegt, aufweist.

10. Einspritzform nach einem beliebigen der Ansprüche 5 bis 9, **dadurch gekennzeichnet, dass** die Kraft zur elastischen Rückstellung (Fₑ) durch eine Feder (97) ausgeübt wird, die zwischen der zweiten Stirnfläche (95B) des Kolbens (95) und dem Boden (911) des Körpers (91) des Stopfens (9) liegt, der an der Seite der zweiten Stirnfläche vorgesehen ist.

## Claims

1. Injection mould (1), of the type comprising a cooling circuit (3), the inlet (31) and the outlet (33) of the cooling circuit (3) each being provided with a connection element (5, 7) with an obturator (51, 71) for connection to and disconnection from a cooling fluid feed circuit (4), **characterized in that** the cooling circuit (3) is provided with a volume compensation device (9), the cooling circuit (3) including sealing gaskets (94, 96) suitable for preventing any loss of cooling fluid out of the cooling circuit (3).

2. Injection mould according to Claim 1, **characterized in that** the said volume compensation device (9) comprises a piston (95) which slides in a sealed manner in an internal bore (93) of the said device, the said piston being subjected, on a first face (95A), to a force (Fₚ) due to the pressure (P₁, P₂) of the cooling fluid in the said cooling circuit (3) and, on a second face (95B) opposite the first face and separated from the cooling fluid, to an elastic return force (Fₑ) opposite to the force due to the pressure.

3. Injection mould according to any one of the preceding claims, **characterized in that** the said volume compensation device (9) is incorporated into the overall dimensions of the mould (1).

4. Injection mould according to Claim 3, **characterized in that** the said volume compensation device (9) is inserted into an opening (351) which opens on one side into the cooling circuit (3) and on the other side to the outside of the mould.

5. Injection mould according to any one of Claims 2 to 4, **characterized in that** the said volume compensation device is made in the form of a plug (9) positioned in a bore (353) concentric with a duct (35) of the said cooling circuit (3), the piston (95) sliding in an internal bore (93) formed in the body (91) of the said plug.

6. Injection mould according to Claim 5, **characterized in that** the said plug (9) is screwed into an internal thread (355) formed in the said bore (353) concentric with the duct (35).

7. Injection mould according to Claim 6, **characterized in that** the said plug (9) is provided with a sealing gasket (94) which ensures sealed screwing of the plug into the said internal thread (355).

8. Injection mould according to any one of Claims 5 to 7, **characterized in that** the said internal bore (93) of the plug (9) is provided with a sealing gasket (96) which ensures sealed sliding of the piston (95) in the said internal bore.

9. Injection mould according to any one of Claims 5 to 8, **characterized in that** the body (91) of the plug (9) comprises an opening (99) for connecting a volume (V₉) inside the plug and located on the side of the said second face (95B) of the piston (95) to the outside of the mould (1).

10. Injection mould according to any one of Claims 5 to 9, **characterized in that** the elastic return force (Fₑ) is exerted by a spring (97) interposed between the said second face (95B) of the piston (95) and the bottom (911) of the body (91) of the plug (9) located on the side of the said second face.
